# EUROPÄISCHE PATENTSCHRIFT

(11) **EP 0 926 209 B1**
(45) Veröffentlichungstag und Bekanntmachung des Hinweises auf die Patenterteilung: **22.01.2003**
(21) Anmeldenummer: 98811193.6
(22) Anmeldetag: 01.12.1998
(51) Int. Cl.: C09B 67/26, C09B 1/34, C09B 69/04, D06P 3/06, C09B 67/22

(54) **Wässrige Farbstofflösungen und deren Verwendung**
Aqueous dye solutions and their use
Solutions aqueuses de colorants er leur utilisation

(30) Priorität: 10.12.1997 EP 97810962
(43) Veröffentlichungstag der Anmeldung: 30.06.1999
(73) Patentinhaber: Ciba Specialty Chemicals Holding Inc., 4057 Basel (CH)
(72) Erfinder: Lacroix, Roger, 68300 Village-Neuf (FR); Adam, Jean-Marie, 68300 Rosenau (FR)

(56) Entgegenhaltungen:
- EP-A- 0 387 201
- BE-A- 631 379
- FR-A- 2 240 940
- FR-A- 2 270 306
- FR-A- 2 294 215
- FR-A- 2 320 335
- GB-A- 2 236 542
- US-A- 2 314 356
- US-A- 4 014 646

## Beschreibung

Die vorliegende Erfindung betrifft konzentrierte wässrige Lösungen blaufärbender Anthrachinonfarbstoffe, ein Verfahren zu deren Herstellung sowie deren Verwendung zum Färben oder Bedrucken von hydroxylgruppenhaltigem oder stickstoffhaltigem Fasermaterial.

Farbstofflösungen weisen gegenüber der festen Handelsform, wie Pulver oder Granulat, eine Reihe von Vorteilen auf, z:B. keine Staubentwicklung beim Ansetzen der Färbeflotten oder auch Druckpasten, keine Benetzungsprobleme durch Klumpenbildung, keine fleckigen Färbungen durch ungenügend gelöste Farbstoffteilchen. Nicht zuletzt wegen dieser Vorteile verbunden mit einer guten Dosierbarkeit der flüssigen Handelsform, findet man heute in zunehmendem Masse Flüssigmarken auf dem Markt, wobei der Trend zu immer konzentrierteren Lösungen geht, da so erhebliche Einsparungen bei Transport und Lagerhaltung möglich sind.

Bei Farbstofflösungen generell und insbesondere bei konzentrierten Präparaten treten jedoch immer wieder Schwierigkeiten hinsichtlich deren Lagerfähigkeit auf. Je konzentrierter eine Farbstofflösung ist, um so leichter kommt es während der Lagerung zu Rekristallisationserscheinungen und es bilden sich mehr oder weniger grosse Agglomerate, die sich z.B. bei der Anwendung derartiger Präparate im Textildruck in Form von Sprickeln als äusserst störend bemerkbar machen oder beispielsweise Leitungen, Pumpen oder Ventile der verwendeten Transport, Dosier oder Färbevorrichtungen verschliessen oder kontaminieren. Darüber hinaus wird auch oft die Bildung eines festen Bodensatzes beobachtet, der sich nur mit Mühe aufrühren lässt. Der Farbstoff ist in solchen Fällen oft nicht mehr in Lösung zu bringen.

Aus der US-A-4,445,905 sind Anthrachinonsäurefarbstoffe mit einem Triethanolammoniumkation bekannt.
US-A-2,314,356 offenbart Anthrachinonsäurefarbstoffe mit Mono-, Di- und Triethanolammonium-, Glucamin- und Aminotrimethylol-methankationen.
Aus der FR-A-2 270 306 sind Lösungen der Anthrachinonsulfonsäurefarbstoffe enthaltend ein Reaktionsprodukt aus einem Caprolactam und einem Polyalkohol bekannt.
FR-A-2 294 215 offenbart konzentrierte Lösungen enthaltend Sulfogruppen enthaltende Anthrachinonfarbstoffe und ε-Caprolactam.
FR-A-2 240 940 offenbart Anthrachinonsäurefarbstoffe enthaltend einen quaternären organischen Amin, sowie deren konzentrierte Lösungen.

Die Aufgabe der vorliegenden Erfindung ist demgemäss die Bereitstellung von konzentrierten wässrigen Lösungen blaufärbender Anthrachinonfarbstoffe, bei welchen die oben genannten Probleme weitgehend vermieden werden können.

Gegenstand der vorliegenden Erfindung sind somit konzentrierte wässrige Farbstofflösungen, dadurch gekennzeichnet, dass sie 5 bis 50 Gew.-%, bezogen auf das Gesamtgewicht der Lösung, mindestens eines Farbstoffs der Formel (1) 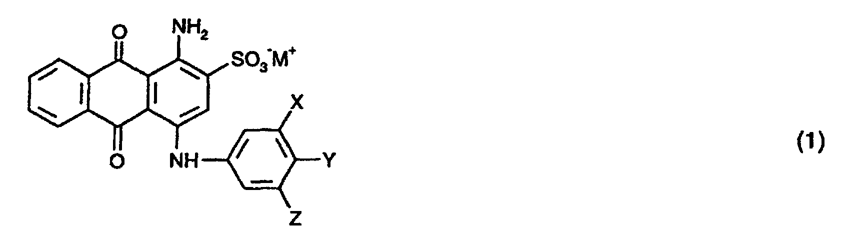 enthalten, worin
X und Y unabhängig voneinander Wasserstoff oder C₁-C₄-Alkyl oder C₁-C₄-Alkoxy bedeuten und
Z C₂-C₆-Alkanoylamino oder C₂-C₄-Hydroxyalkylsulfamoyl ist,
M⁺ das Ammoniumkation 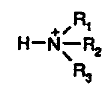 eines Amins der Formel 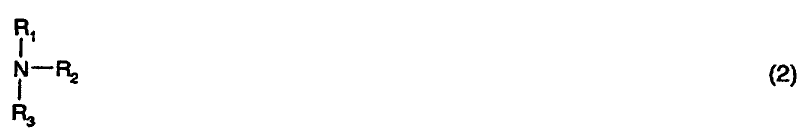 ist, wobei
R₁, R₂ und R₃ ein Rest der Formel -(CH₂)₂-O-CH₂-CH(CH₃)-OH oder der Formel -(CH₂)₂-O-CH(CH₃)-CH₂-OH sind.

Als C₁-C₄-Alkyl kommen für X und Y unabhängig voneinander z.B. Methyl, Ethyl, Propyl, Isopropyl, Butyl, sek.-Butyl, tert.-Butyl oder Isobutyl, insbesondere Methyl oder Ethyl und vorzugsweise Methyl, in Betracht.

Als C₁-C₄-Alkoxy kommen für X und Y unabhängig voneinander z.B. Methoxy, Ethoxy, Propoxy, Isopropoxy, Butoxy oder Isobutoxy, insbesondere Methoxy oder Ethoxy und vorzugsweise Methoxy, in Betracht.
Als C₂-C₆-Alkanoylamino kommt für Z beispielsweise Acetylamino, Propionylamino, Butyrylamino, Pentanoylamino oder Hexanoylamino und vorzugsweise C₂-C₄-Alkanoylamino, wie z.B. Acetylamino, Propionylamino oder Butyrylamino, und Insbesondere Acetylamino oder Propionylamino in Betracht.

Als C₂-C₄-Hydroxyalkylsulfamoyl kommt für Z beispielsweise 2-Hydroxyethylsulfamoyl, 2- oder 3-Hydroxypropylsulfamoyl oder 2-, 3-, oder 4-Hydroxybutylsulfamoyl und insbesondere 2-Hydroxyethylsulfamoyl in Betracht.

Die erfindungsgemässen konzentrierten wässrigen Farbstofflösungen können weitere Zusätze, wie z.B. Harnstoff, Caprolactam, N-Methylpyrrolidon oder Polyethylenglykol, enthalten.

In einer bevorzugten Ausführungsform enthalten die erfindungsgemässen Farbstofflösungen Caprolactam oder N-Methylpyrrolidon und insbesondere Caprolactam.

In den erfindungsgemässen Farbstofflösungen sind die genannten Zusätze in einer Menge von 0,01 bis 30 Gew.-%, vorzugsweise 0,1 bis 20 Gew.-% und insbesondere 1 bis 20 Gew.-%, bezogen auf das Gesamtgewicht der Farbstofflösung, enthalten.

Ferner können die erfindungsgemässen konzentrierten wässrigen Lösungen noch Pilz- und/oder Bakterienwachstum-hemmende Stoffe enthalten.

Bevorzugt sind Farbstofflösungen, dadurch gekennzeichnet, dass X und Y unabhängig voneinander Wasserstoff oder Methyl sind und Z C₂-C₄-Alkanoylamino oder C₂-C₄-Hydroxyalkylsulfamoyl und insbesondere Acetylamino, Propionylamino oder 2-Hydroxyethylsulfamoyl bedeutet.

Bevorzugt enthalten die erfindungsgemässen Farbstofflösungen 10 bis 50 Gew.-% und insbesondere 20 bis 50 Gew.-% mindestens eines Farbstoffs der Formel (1), bezogen auf das Gesamtgewicht der Lösung.

Bevorzugt sind Farbstofflösungen die dadurch gekennzeichnet sind, dass sie zwei Farbstoffe der Formel (1) enthalten.

Besonders bevorzugt enthalten die erfindungsgemässen Farbstofflösungen zwei Farbstoffe der Formeln (3), (4) oder (5) 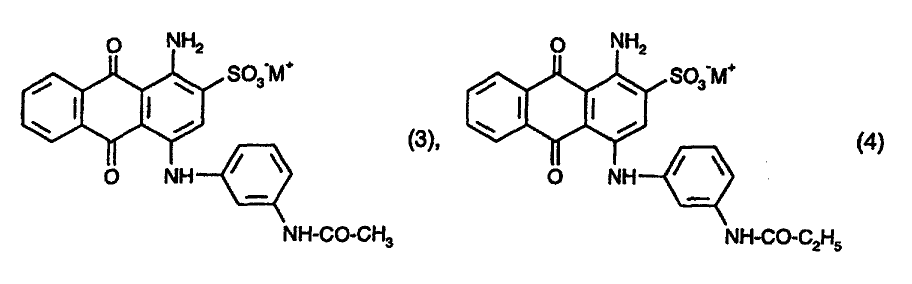 oder 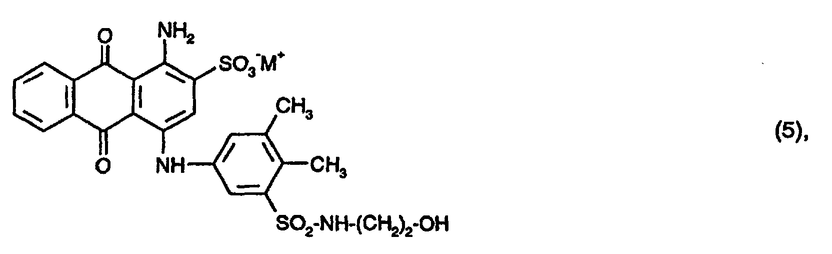 worin
M⁺ die oben angegebenen Bedeutungen und Bevorzugungen hat.

So enthalten die erfindungsgemässen Farbstofflösungen z.B.
(i) einen Farbstoff der Formel (3) und einen Farbstoff der Formel (5),
(ii) einen Farbstoff der Formel (4) und einen Farbstoff der Formel (5) oder
(iii) einen Farbstoff der Formel (3) und einen Farbstoff der Formel (4).

Ganz besonders bevorzugt sind Farbstofflösungen gemäss (i) oder (ii), welche; bezogen auf die Gesamtmenge der Farbstoffe der Formeln (3) und (5) oder (4) und (5), mindestens 5 Gewichtsprozent, vorzugsweise mindestens 10 Gewichtsprozent und insbesondere mindestens 15 Gewichtsprozent, eines Farbstoffes der Formel (5) enthalten.

Ganz besonders bevorzugt sind ferner Farbstofflösungen gemäss (iii), welche, bezogen auf die Gesamtmenge der Farbstoffe der Formeln (3) und (4), mindestens 5 Gewichtsprozent, vorzugsweise mindestens 10 Gewichtsprozent und insbesondere mindestens 20 Gewichtsprozent, eines Farbstoffes der Formel (3) enthalten.

Gegenstand der vorliegenden Erfindung ist weiterhin ein Verfahren zur Herstellung der erfindungsgemässen Farbstofflösungen, dadurch gekennzeichnet, dass man mindestens einen Farbstoff der Formel (1), worin M⁺ ein Wasserstoffion bedeutet, zusammen mit einem Amin der Formel (2) in Wasser löst oder mindestens einen Farbstoff der Formel (1), worin M⁺ das Ammoniumkation 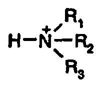 eines Amins der Formel (2) ist, in Wasser löst, wobei X, Y, Z, R₁, R₂ und R₃ unabhängig voneinander die oben angegebenen Bedeutungen haben.

Die Farbstoffe der Formel (1), worin M⁺ ein Wasserstoffion bedeutet, sind bekannt oder können analog zu bekannten Verfahren in an sich bekannter Weise hergestellt werden.

Zweckmässigerweise erfolgt die Herstellung im einzelnen so, dass man die freien Säuren der Anthrachinonfarbstoffe der Formel (1), worin M⁺ ein Wasserstoffion bedeutet, in trockener oder feuchter Form, beispielsweise in Form des nach der Synthese anfallenden feuchten Filterpresskuchens, in Wasser aufschlämmt und beispielsweise mit einer wässrigen Lösung des Amins der Formel (2) bei einem pH-Wert von beispielsweise 6 bis 8, vorzugsweise 6,5 bis 7,5, bei Raumtemperatur oder leicht erhöhter Temperatur, beispielsweise bei 35 bis 50°C, neutralisiert, bis sich eine homogene Lösung bildet. Selbstverständlich kann die Herstellung auch bei höherer Temperatur erfolgen. Die so erhaltene Farbstofflösung wird gegebenenfalls noch klärfiltriert.

Gegebenenfalls kann das Wasser, welches zum Aufschlämmen der Farbstoffe verwendet wird oder die wässrige Lösung des Amins, sofern eine wässrige Lösung des Amins verwendet wird, die oben genannten Zusätze bereits enthalten, zweckmässigerweise dann, wenn die genannten Zusätze bei Raumtemperatur in fester Form vorliegen. Die genannten Zusätze können auch im Anschluss an das Aufschlämmen oder im Anschluss an die Neutralisation der Farbstoffsäuren in der gewünschten Menge zugesetzt werden. Sofern die genannten Zusätze bei Raumtemperatur in fester Form vorliegen, löst man diese zweckmässigerweise zuvor in der erforderlichen Menge Wasser.

Die Menge der genannten Zusätze kann in weiten Grenzen schwanken und ist abhängig von der Löslichkeit des Farbstoffs, von der zu lösenden Farbstoffmenge und von der Struktur des verwendeten Amins.

Die erfindungsgemässen Farbstofflösungen, die zwei Farbstoffe der Formel (1) enthalten, werden z.B. erhalten, indem man zunächst (i) die beiden Farbstoffsäuren im gewünschten Mischungsverhältnis miteinander mischt oder (ii) eine Mischung der beiden Farbstoffsäuren durch die Umsetzung von 1-Amino-4-brom-anthrachinon-2-sulfonsäure mit zwei aromatischen Aminen der Formel (6) 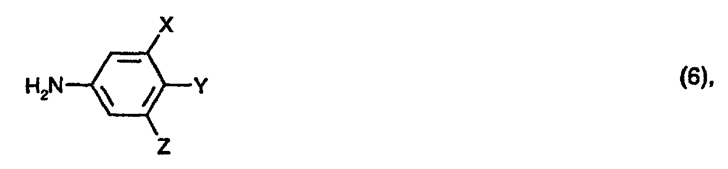 worin
X, Y und Z die oben angegebenen Bedeutungen haben, herstellt und die trockene Farbstoffmischung gemäss (i) oder den feuchten Filterkuchen gemäss (ii) anschliessend nach dem oben beschriebenen Verfahren weiterverarbeitet.

Farbstoffe der Formel (1) können z.B. erhalten werden, indem man 1 -Amino-4-brom-anthrachinon-2-sulfonsäure mit einem aromatischen Amin der Formel (6) und anschliessend mit einem Amin der Formel (2) umsetzt. Die erste Umsetzung erfolgt vorzugsweise in wässriger Lösung bei einer Temperatur von z.B. 50 bis 100°C, insbesondere 65 bis 85°C, in Gegenwart von z.B. Kupferchlorid oder Kupfersulfat. Die Umsetzung mit einem Amin der Formel (2) erfolgt z.B. durch Neutralisation einer wässrigen Farbstofflösung mit dem entsprechenden Amin.

Die erfindungsgemässen Farbstofflösungen können in den üblichen Farbe- bzw. Druckverfahren angewendet werden. Die Färbeflotten oder Druckpasten können ausser Wasser und den Farbstoffen weitere Zusätze, beispielsweise Netzmittel, Antischaummittel, Egatisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die erfindungsgemässen Farbstofflösungen sind auch zum Färben aus Kurzflotten, wie z.B. bei Kontinuefärbeverfahren oder diskontinuierlichen und kontinuierlichen Schaumfärbeverfahren, geeignet.

Die in den erfindungsgemässen Farbstofflösungen enthaltenen Farbstoffe zeichnen sich insbesondere durch gutes Aufziehverhalten, gute Löslichkeit und Druckpastenstabilität sowie durch gute Kombinierbarkeit aus.

Die erfindungsgemässen Farbstofflösungen weisen eine gute Lagerstabilität auf. Sie sind beispielsweise bei einer Temperatur von -5 bis +40°C mehrere Monate lagerstabil und gegenüber Temperaturschwankungen weitgehend unempfindlich.

Die erfindungsgemässen Farbstofflösungen weisen ferner eine gute Hartwasserbeständigkeit auf und sie lassen sich mit Wasser in beliebigem Verhältnis verdünnen, etwa bei der Herstellung der Färbeflotte, ohne das die gelösten Farbstoffe ausfallen.

Es werden egale Färbungen mit guten Allgemeinechtheiten, insbesondere guter Reib-, Nass-, Nassreib- und Lichtechtheit erhalten.

Die erfindungsgemässen Farbstofflösungen eignen sich zum Färben oder Bedrucken von hydroxylgruppenhaltigem oder stickstoffhaltigem Fasermaterial. Besondere Eignung finden sie zum Färben oder Bedrucken von natürlichen Polyamidmaterialien, wie z.B. Wolle, oder insbesondere von synthetischen Polyamidmaterialien, wie z.B. Polyamid 6 oder Polyamid 6.6, oder von Seide und sind auch geeignet zum Färben oder Bedrucken von Mischgeweben oder -Garnen aus Wolle und synthetischem Polyamid.

Das genannte Material, insbesondere Textilmaterial, kann dabei in den verschiedensten Verarbeitungsformen vorliegen, wie z.B. als Faser, Garn, Gewebe oder Gewirke und insbesondere in Form von Teppichen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: (Nicht erfindungsgemäss) In einem Sulfierkolben werden 880 Teile Wasser vorgelegt und es werden 382 Teile 1-Amino-4-brom-anthrachinon-2-sulfonsäure, 82 Teile 3-Propionamido-anilin und 75 Teile 3-Acetamido-anilin eingetragen. Nach Zugabe von 201 Teilen Natriumhydrogencarbonat wird auf eine Temperatur von 75°C erwärmt. Unter ständigem Rühren werden dann 1 Teil Kupfer und 1 Teil Kupferchlorid zugegeben. Nach ca. 6 Stunden ist die Reaktion beendet. Man gibt 2180 Teile Wasser sowie 345 Teile 32%ige HCL zu. Man rührt noch 30 Minuten bei 80°C und das erhaltene Produkt wird über eine Nutsche abgesaugt und mit einer warmen Lösung von 25 Teilen HCl in 800 Teilen Wasser nachgewaschen. Man erhält 780 Teile eines noch feuchten Produktes, welches die Farbstoffe der Formeln (101) und (102) 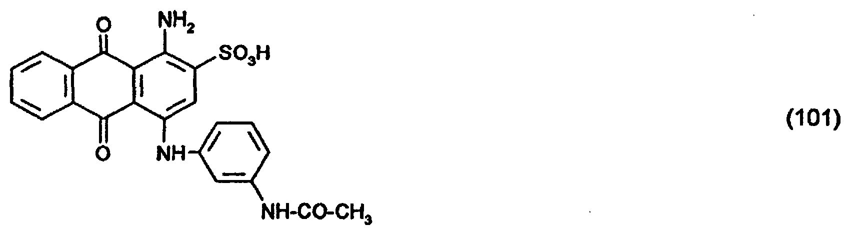 und 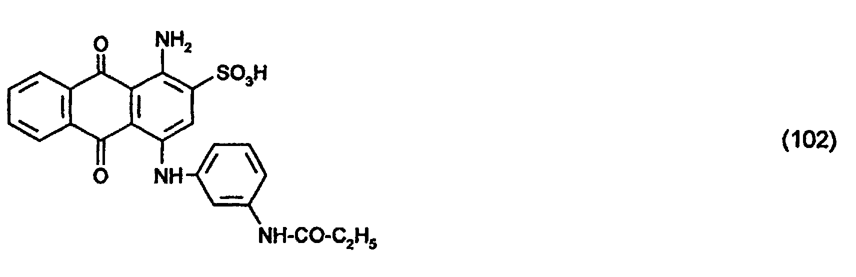 in einem Gewichtsverhältnis von 50:50 enthält. 28,5 Teile des feuchten Produkts werden in 31,1 Teilen entmineralisiertem Wasser angeschlämmt. Diese Paste wird dann mit 10,1 Teilen Triethanolamin bei einem pH-Wert von 7 bis 7,2 neutralisiert. Anschliessend werden 30,0 Teile ε-Caprolactam und 0,3 Teile eines handelsüblichen Bakterizids zugesetzt und die Farbstofflösung wird klärfiltriert. Die Zusammensetzung dieser flüssigen Formulierung ist wie folgt:
34,8 Gew.-% einer Mischung der Farbstoffe der Formeln (3) und (4) als Salze des Triethanolamins, wobei das Gewichtsverhältnis der Farbstoffe wie oben angegeben ist,
30,0 Gew.-% ε-Caprolactam,
0,3 Gew.-% eines handelsüblichen Bakterizids und
34,9 Gew.-% Wasser.

Beispiel 2: (Nicht erfindungsgemäss) Verfährt man wie in Beispiel 1 beschrieben, verwendet jedoch anstelle von 82 Teilen 3-Propionamido-anilin 138 Teile 3-Propionamido-anilin und anstelle von 75 Teilen 3-Acetamido-anilin 51,2 Teile 5-Amino-1,2-xylol-3-sulfo-2'hydroxyethylamid, so erhält man 840 Teile eines noch feuchten Produktes, welches die Farbstoffe der Formeln (102) und (103) 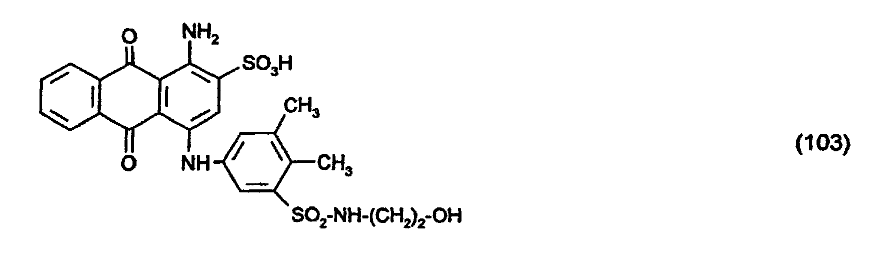 in einem Gewichtsverhältnis von 80:20 enthält. 34,0 Teile des feuchten Produkts werden in 50,6 Teilen entmineralisiertem Wasser angeschlämmt. Diese Paste wird dann mit 15,1 Teilen wässrigem Triisopropanolamin (66%-ig) bei einem pH-Wert von 7 bis 7,2 neutralisiert. Anschliessend werden 0,3 Teile eines handelsüblichen Bakterizids zugesetzt und die Farbstofflösung wird klärfiltriert. Die Zusammensetzung dieser flüssigen Formulierung ist wie folgt:
37,7 Gew.-% einer Mischung der Farbstoffe der Formeln (4) und (5) als Salze des Triisopropanolamins, wobei das Gewichtsverhältnis der Farbstoffe wie oben angegeben ist,
0,3 Gew.-% eines handelsüblichen Bakterizids und
62,0 Gew.-% Wasser.

Beispiel 3: (Nicht erfindungsgemäss) Verfährt man wie in Beispiel 1 beschrieben, verwendet jedoch anstelle von 82 Teilen 3-Propionamido-anilin 43 Teile 3-Propionamido-anilin und anstelle von 75 Teilen
3-Acetamido-anilin 192 Teile 5-Amino-1,2-xylol-3-sulfo-2'-hydroxyethylamid, so erhält man 880 Teile eines noch feuchten Produktes, welches die Farbstoffe der Formeln (102) und (103) in einem Gewichtsverhältnis von 25:75 enthält. 35,0 Teile des feuchten Produkts werden in 25,0 Teilen entmineralisiertem Wasser angeschlämmt. Diese Paste wird dann mit 15,0 Teilen wässrigem Triisopropanolamin (66%-ig) bei einem pH-Wert von 7 bis 7,2 neutralisiert. Anschliessend werden 20,0 Teile ε-Caprolactam und 0,3 Teile eines handelsüblichen Bakterizids zugesetzt und die Farbstofflösung wird klärfiltriert. Die Zusammensetzung dieser flüssigen Formulierung ist wie folgt:
25,1 Gew.-% einer Mischung der Farbstoffe der Formeln (4) und (5) als Salze des Triisopropanolamins, wobei das Gewichtsverhältnis der Farbstoffe wie oben angegeben ist,
20,0 Gew.-% ε-Caprolactam,
0,3 Gew.-% eines handelsüblichen Bakterizids und
54,6 Gew.-% Wasser.

Beispiel 4: (Nicht erfindungsgemäss) Verfährt man wie in Beispiel 1 beschrieben, verwendet jedoch anstelle von 82 Teilen 3-Propionamido-anilin 128 Teile 5-Amino-1,2-xylol-3-sulfo-2'hydroxyethylamid, so erhält man 860 Teile eines noch feuchten Produktes, welches die Farbstoffe der Formeln (101) und (103) in einem Gewichtsverhältnis von 50:50 enthält. 39,1 Teile des feuchten Produkts werden in 28,3 Teilen entmineralisiertem Wasser angeschlämmt. Diese Paste wird dann mit 7,3 Teilen Triethanolamin bei einem pH-Wert von 7 bis 7,2 neutralisiert. Anschliessend werden 25,0 Teile ε-Caprolactam und 0,3 Teile eines handelsüblichen Bakterizids zugesetzt und die Farbstofflösung wird klärfiltriert. Die Zusammensetzung dieser flüssigen Formulierung ist wie folgt:
25,8 Gew.-% einer Mischung der Farbstoffe der Formeln (3) und (5) als Salze des Triethanolamins, wobei das Gewichtsverhältnis der Farbstoffe wie oben angegeben ist,
25,0 Gew.-% ε-Caprolactam,
0,3 Gew.-% eines handelsüblichen Bakterizids und
48,9 Gew.-% Wasser.

Beispiel 5: (Nicht erfindungsgemäss) 37,0 Teile des feuchten Produkts der Farbstoffe der Formeln (101) und (103) aus Beispiel 4 werden in 28,4 Teilen entmineralisiertem Wasser angeschlämmt. Diese Paste wird dann mit 14,3 Teilen wässrigem Triisopropanolamin (66%-ig) bei einem pH-Wert von 7 bis 7,2 neutralisiert. Anschliessend werden 20,0 Teile ε-Caprolactam und 0,3 Teile eines handelsüblichen Bakterizids zugesetzt und die Farbstofflösung wird klärfiltriert. Die Zusammensetzung dieser flüssigen Formulierung ist wie folgt:
27,5 Gew.-% einer Mischung der Farbstoffe der Formeln (3) und (5) als Salze des Triethanolamins, wobei das Gewichtsverhältnis der Farbstoffe wie oben angegeben ist,
20,0 Gew.-% ε-Caprolactam,
0,3 Gew.-% eines handelsüblichen Bakterizids und
52,2 Gew.-% Wasser

Die erhaltenen Formulierungen gemäss den Beispielen 1 bis 5 sind bei einer Temperatur von -5 bis +40°C lagerstabil und färben Polyamidgewebe in blauen Farbtönen.

Beispiele 1a, 4a, 2a, 3a und 5a: Ersetzt man in den Beispielen 1 und 4 Triethanolamin und in den Beispielen 2, 3 und 5 wässriges Triisopropanolamin jeweils durch eine äquimolare Menge des Amins der Formel N-[(CH₂)₂-O-CH₂-CH(CH₃)-OH]₃ und verzichtet auf den Zusatz von ε-Caprolactam, wie in den Beispielen 1, 3, 4 und 5 angegeben, so erhält man ebenfalls Formulierungen die bei einer Temperatur von -5 bis +40°C lagerstabil sind und Polyamidgewebe in blauen Farbtönen färben.

Beispiel 6: In einem Sulfierkolben werden 880 Teile Wasser vorgelegt und es werden 382 Teile 1-Amino-4-brom-anthrachinon-2-sulfonsäure und 158 Teile 3-Acetamido-anilin eingetragen. Nach Zugabe von 200 Teilen Natriumhydrogencarbonat wird auf eine Temperatur von 75°C erwärmt. Unter ständigem Rühren werden dann 1 Teil Kupfer und 1 Teil Kupferchlorid zugegeben. Nach ca. 6 Stunden ist die Reaktion beendet. Man gibt 2180 Teile Wasser sowie 345 Teile 32%-iger HCL zu. Man rührt noch 30 Minuten bei 80°C und das erhaltene Produkt wird über eine Nutsche abgesaugt und mit einer warmen Lösung von 25 Teilen HCI in 800 Teilen Wasser nachgewaschen. Man erhält 750 Teile eines noch feuchten Produktes, welches 36.5 Gew.-% des Farbstoffes der Formel (101) enthält.
67,2 Teile des feuchten Produkts werden in 4,2 Teilen entmineralisiertem Wasser angeschlämmt. Diese Paste wird dann mit 27,3 Teilen des Amins der Formel N-[(CH₂)₂-O-CH(CH₃)CH₂-OH]₃ bei einem pH-Wert von 7,0 neutralisiert. Anschliessend werden 0,3 Teile eines handelsüblichen Bakterizids (®Proxel GXL der Firma Zeneca) und 1 Teil eines handelsüblichen Penetrationsbeschleunigers (®Albegal FFA der Firma Ciba Specialty Chemicals AG) zugesetzt und die Farbstofflösung wird klärfiltriert. Die Zusammensetzung dieser flüssigen Formulierung ist wie folgt:
51,2 Gew.-% des Farbstoffes der Formeln (101) als Salz des Tris-(hydroxyisopropoxyethyl)-amins,
0,3 Gew.-% eines handelsüblichen Bakterizids
1,0 Gew.-% eines handelsüblichen Penetrationsbeschleunigers und
47,5 Gew.-% Wasser.

Die erhaltene Formulierung ist bei einer Temperatur von -5 bis +40°C lagerstabil und färbt Polyamidgewebe in blauem Farbton.

### Färbevorschrift I (Nicht erfindungsgemäss)

Man färbt 10 Teile Polyamid-6,6-Gewebe in 500 Teilen einer wässrigen Flotte, die 2 g/l Ammoniumacetat enthält und mit Essigsäure auf pH 5 gestellt wird. Der Anteil der flüssigen Formulierung gemäss Beispiel 1 beträgt 2 %, bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

### Färbevorschrift II (Nicht erfindungsgemäss)

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil der flüssigen Formulierung gemäss Beispiel 1 beträgt 2 %, bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

### Färbevorschrift III (Nicht erfindungsgemäss)

Man färbt 10 Teile Wollstück in 500 Teilen einer wässrigen Flotte. Bezogen auf das Fasergewicht enthält die Flotte 2 % der flüssigen Formulierung gemäss Beispiel 1, 5 % Glaubersalz kalz. und 2 % 80%-iger Essigsäure. Die Färbedauer bei einer Temperatur von 98°C beträgt 30-60 Minuten.

## Patentansprüche

1. Konzentrierte wässrige Farbstofflösungen, **dadurch gekennzeichnet, dass** sie 5 bis 50 Gew.-%, bezogen auf das Gesamtgewicht der Lösung, mindestens eines Farbstoffs der Formel (1) 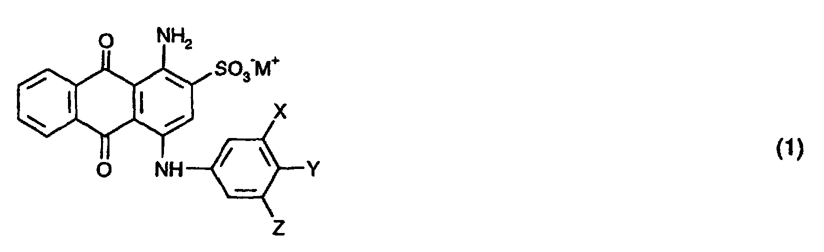 enthalten, worin
X und Y unabhängig voneinander Wasserstoff oder C₁-C₄-Alkyl oder C₁-C₄-Alkoxy bedeuten und Z C₂-C₆-Alkanoylamino oder C₂-C₄-Hydroxyalkylsulfamoyl ist, M⁺ das Ammoniumkation 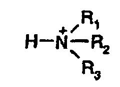 eines Amins der Formel 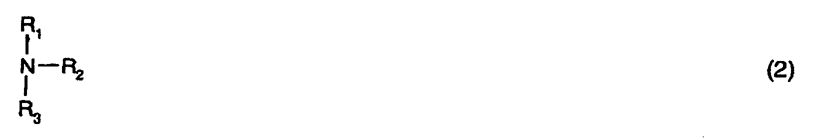 ist, wobei
R₁, R₂ und R₃ ein Rest der Formel -(CH₂)₂-O-CH₂-CH(CH₃)-OH oder der Formel -(CH₂)₂-O-CH(CH₃)-CH₂-OH sind.

2. Farbstofflösungen gemäss Anspruch 1, **dadurch gekennzeichnet, dass** sie Caprolactam oder N-Methylpyrrolidon enthalten.

3. Parbstofflösungen gemäss einem der Ansprüche 1 und 2, **dadurch gekennzeichnet, dass** X und Y unabhängig voneinander Wasserstoff oder Methyl sind und Z C₂-C₄-Alkanoylamino oder C₂-C₄-Hydroxyalkylsulfamoyl bedeutet.

4. Farbstofflösungen gemäss einem der Ansprüche 1 bis 3, **dadurch gekennzeichnet, dass** X und Y unabhängig voneinander Wasserstoff oder Methyl sind und Z Acetylamino, Propionylamino oder 2-Hydroxyethylsulfamoyl bedeutet.

5. Farbstofflösungen gemäss einem der Ansprüche 1 bis 4, **dadurch gekennzeichnet, dass** sie 10 bis 50 Gew.-%, insbesondere 20 bis 50 Gew.-%, mindestens eines Farbstoffs der Formel (1) enthalten.

6. Farbstofflösungen gemäss einem der Ansprüche 1 bis 5, **dadurch gekennzeichnet, dass** sie zwei Farbstoffe der Formel (1) enthalten.

7. Farbstofflösungen gemäss einem der Ansprüche 1 bis 6, **dadurch gekennzeichnet, dass** sie zwei Farbstoffe der Formeln (3), (4) oder (5) 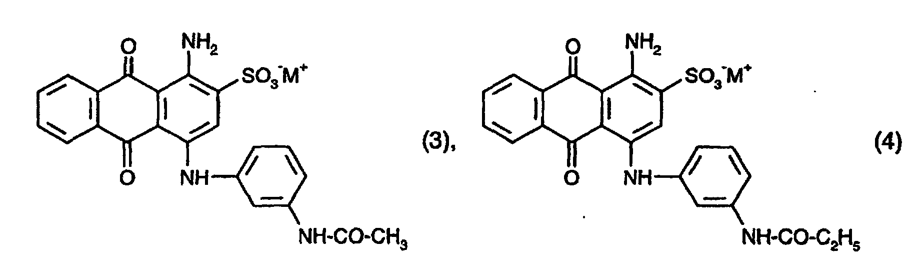 oder 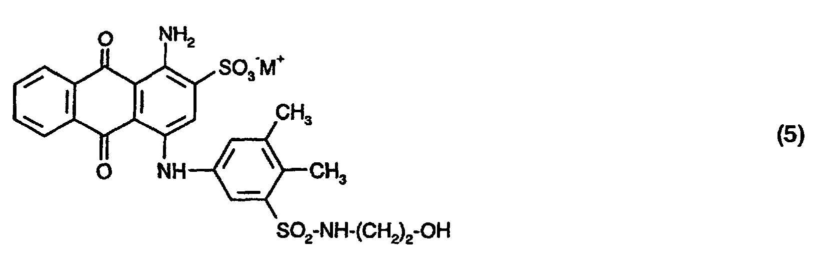 enthalten, worin
M⁺ die in Anspruch 1 angegebenen Bedeutungen hat.

8. Verfahren zur Herstellung von Farbstofflösungen gemäss einem der Ansprüche 1 bis 7, **dadurch gekennzeichnet, dass** man mindestens einen Farbstoff der Formel (1), worin M⁺ ein Wasserstoffion bedeutet, zusammen mit einem Amin der Formel (2) in Wasser löst oder mindestens einen Farbstoff der Formel (1), worin M⁺ das Ammoiumkation 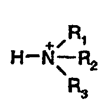 eines Amins der Formel (2) ist, in Wasser löst, wobei X, Y, Z, R₁, R₂ und R₃ die in Anspruch 1 angegebenen Bedeutungen haben.

9. Verwendung der Farbstofflösungen gemäss einem der Ansprüche 1 bis 7 zum Färben oder Bedrucken von hydroxylgruppenhaltigem oder stickstoffhaltigem Fasermaterial.

10. Verwendung gemäss Anspruch 9 zum Färben oder Bedrucken von natürlichem oder synthetischem Polyamidfasermaterial, insbesondere synthetischem Polyamidfasermaterial.

## Claims

1. A concentrated aqueous dye solution, which comprises 5 to 50 % by weight, based on the total weight of the solution, of at least one dye of formula (1) 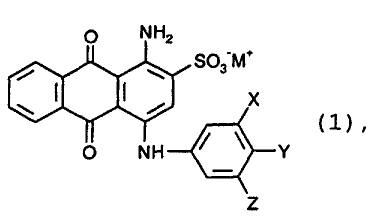 in which
X and Y are each independently of the other hydrogen or C₁-C₄alkyl or C₁-C₄alkoxy, and
Z is C₂-C₆alkanoylamino or C₂-C₄hydroxyalkylsulfamoyl, M⁺ is the ammonium cation 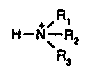 of an amine of formula 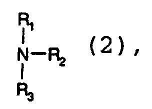 where
R₁, R₂ and R₃ are a radical of formula -(CH₂)₂-O-CH₂-CH(CH₃)-OH or of formula -(CH₂)₂-O-CH(CH₃)-CH₂-OH.

2. A dye solution according to claim 1, which comprises caprolactam or N-methylpyrrolidone.

3. A dye solution according to either claim 1 or claim 2, wherein X and Y are each independently of the other hydrogen or methyl, and Z is C₂-C₄alkanoylamino or C₂-C₄hydroxyalkylsulfamoyl.

4. A dye solution according to any one of claims 1 to 3, wherein X and Y are each independently of the other hydrogen or methyl, and Z is acetylamino, propionylamino or 2-hydroxyethylsulfamoyl.

5. A dye solution according to any one of claims 1 to 4, which comprises 10 to 50 % by weight, preferably 20 to 50 % by weight, of at least one dye of formula (1).

6. A dye solution according to any one of claims 1 to 5, which comprises two dyes of formula (1).

7. A dye solution according to any one of claims 1 to 6, which comprises two dyes of formulae (3), (4) or (5) 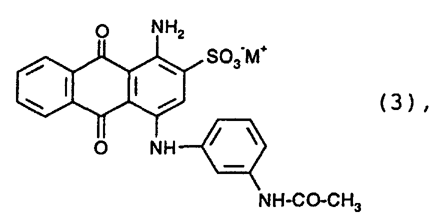 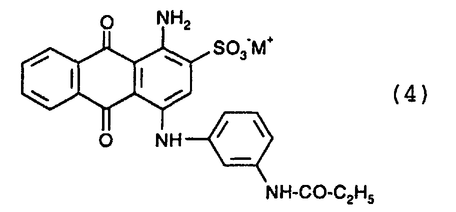 or 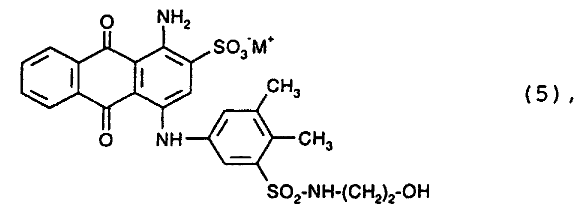 in which
M⁺ has the meaning defined in claim 1.

8. A process for the preparation of a dye solution according to any one of claims 1 to 7, which comprises dissolving at least one dye of formula (1) in which M⁺ is a hydrogen ion together with an amine of formula (2) in water or dissolving at least one dye of formula (1) in which M⁺ is the ammonium cation of an amine of 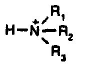 formula (2) in water, X, Y, Z, R₁, R₂ and R₃ having the meanings defined in claim 1.

9. Use of the dye solution according to any one of claims 1 to 7 for dyeing or printing hydroxyl-containing or nitrogen-containing fibre material.

10. Use according to claim 9 for dyeing or printing natural or synthetic polyamide fibre material, in particular synthetic polyamide fibre material.

## Revendications

1. Solutions de colorants aqueuses concentrées **caractérisées en ce qu'**elles présentent une teneur de 5 à 50 % en poids, par rapport au poids total de la solution, en au moins un colorant de formule (1) 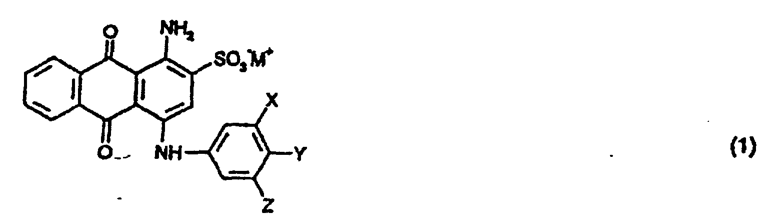 où
X et Y représentent, indépendamment l'un de l'autre, un atome d'hydrogène ou un groupe alkyle en C₁-C₄ ou alkoxy en C₁-C₄ et
Z représente un groupe (alcanoyl en C₂-C₆)amino ou hydroxy(alkyl en C₂-C₄)sulfamoyle,
M⁺ représente le cation ammonium 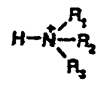 d'une amine de formule 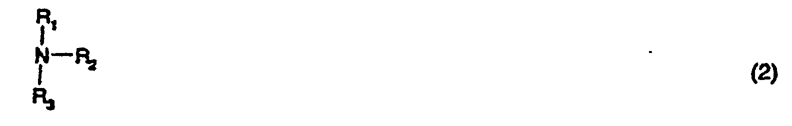
où
R₁, R₂ et R₃ représentent un reste de formule -(CH₂)₂-O-CH₂-CH(CH₃)-OH ou de formule - (CH₂)₂-O-CH(CH₃)-CH₂-OH.

2. Solutions de colorants selon la revendication 1, **caractérisées en ce qu'**elles contiennent du caprolactame ou de la N-méthylpyrrolidone.

3. Solutions de colorants selon l'une des revendications 1 et 2, **caractérisées en ce que** X et Y représentent, indépendamment l'un de l'autre, un atome d'hydrogène ou un groupe méthyle et Z représente un groupe (alcanoyl en C₂-C₄)amino ou hydroxy(alkyl en C₂-C₄) sulfamoyle.

4. Solutions de colorants selon l'une des revendications 1 à 3, **caractérisées en ce que** X et Y représentent, indépendamment l'un de l'autre, un atome d'hydrogène ou un groupe méthyle et Z représente des groupes acétylamino, propionylamino ou 2-hydroxy-éthylsulfamoyle.

5. Solutions de colorants selon l'une des revendications 1 à 4, **caractérisées en ce qu'**elles présentent une teneur de 10 à 50 %, en particulier 20 à 50 % en poids, en au moins un colorant de formule (1).

6. Solutions de colorants selon l'une des revendications 1 à 5, **caractérisées en ce qu'**elles renferment deux colorants de formule (1).

7. Solutions de colorants selon l'une des revendications 1 à 6, **caractérisées en ce qu'**elles renferment deux colorants de formules (3), (4) ou (5) 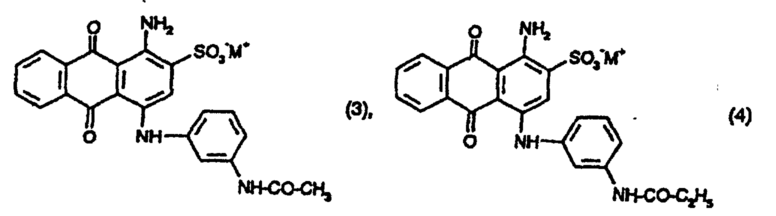 ou 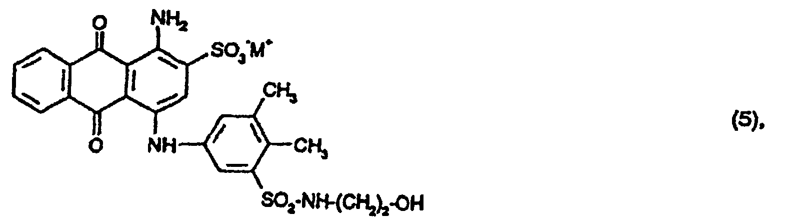 où M⁺ possède la signification donnée à la revendication 1.

8. Procédé pour la préparation de solutions de colorants selon l'une des revendications 1 à 7, **caractérisé en ce qu'**on dissout dans l'eau au moins un colorant de formule (1), où M⁺ représente un ion hydrogène, conjointement avec une amine de formule (2) dans l'eau ou au moins un colorant de formule (1), où M⁺ représente le cation ammonium 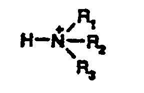 d'une amine de -formule (2), X, Y, Z, R₁, R₂ et R₃ possèdent les significations données à la revendication 1.

9. Utilisation des solutions de colorants selon l'une des revendications 1 à 7 pour la teinture ou l'impression de matière fibreuse hydroxylée ou azotée.

10. Utilisation selon la revendication 9 pour la teinture ou l'impression de matière fibreuse polyamide naturelle ou synthétique, en particulier de matière fibreuse polyamide synthétique.
